# EUROPÄISCHE PATENTSCHRIFT

(11) **EP 4 155 099 B1**
(45) Veröffentlichungstag und Bekanntmachung des Hinweises auf die Patenterteilung: **10.07.2024**
(21) Anmeldenummer: 22158032.7
(22) Anmeldetag: 22.02.2022
(51) Int. Cl.: B60D 1/14, B62D 13/00

(54) **FAHRZEUG**
VEHICLE
VÉHICULE

(30) Priorität: 22.09.2021 AT 507522021
(43) Veröffentlichungstag der Anmeldung: 29.03.2023
(73) Patentinhaber: Wilhelm Schwarzmüller GmbH, 4785 Freinberg (AT)
(72) Erfinder: Grundnig, Johannes, 4784 Wernstein am Inn (AT)
(74) Vertreter: Hübscher & Partner Patentanwälte GmbH

(56) Entgegenhaltungen:
- EP-A2- 1 647 725
- CH-A- 129 446
- DE-A1- 3 013 780
- DE-A1- 3 144 177

## Beschreibung

Die Erfindung bezieht sich auf ein Fahrzeug mit einem zwischen einem Drehschemel und einem Fahrzeugrahmen angeordneten Drehkranz aus zwei mithilfe von Wälzkörpern ineinander drehbar gelagerten Kranzringen, deren einerseits mit dem Drehschemel und anderseits mit dem Fahrzeugrahmen verschraubte Befestigungsflansche zwischen am Drehschemel und am Fahrzeugrahmen angeordneten, am Umfangsrand der Befestigungsflansche anliegenden Schubübertragungskörpern spielfrei gehalten sind.

Die Kranzringe eines Drehkranzes zwischen dem Drehschemel und dem Rahmen eines Fahrzeugs weisen Befestigungsflansche auf, die einerseits mit dem Drehschemel und anderseits mit dem Fahrzeugrahmen verschraubt sind. Zur Schubentlastung dieser Befestigungsschrauben zufolge horizontaler Krafteinwirkungen werden die Befestigungsflansche mit über den Umfang verteilten Schubübertragungskörpern spielfrei eingefasst, die mit dem Drehschemel bzw. dem Fahrzeugrahmen verschweißt sind. Nachteilig ist allerdings, dass aufgrund der Durchmessertoleranzen der Befestigungsflansche der Drehkränze die Schubübertragungskörper vor dem Verschweißen mit dem Drehschemel bzw. dem Fahrzeugrahmen in ihrer Lage einzeln an die jeweilige Form und Größe der Befestigungsflansche arbeitsaufwendig angepasst werden müssen. Das Dokument EP 1647725 A2 offenbart einen Drehschemel gemäß dem Stand der Technik.

Der Erfindung liegt somit die Aufgabe zugrunde, die spielfreie Einfassung der Befestigungsflansche eines Drehkranzes zwischen Schubübertragungskörpern konstruktiv so auszugestalten, dass ein nachträglicher Toleranzausgleich gewährleistet werden kann.

Ausgehend von einem Fahrzeug der eingangs geschilderten Art löst die Erfindung die gestellte Aufgabe dadurch, dass der Drehschemel und der Fahrzeugrahmen Anschläge für die Schubübertragungskörper aufweisen und dass zwischen den Anschlägen und den gegenüber den Anschlägen radial verlagerbaren Schubübertragungskörpern ein in Umfangsrichtung verlaufender Keilspalt vorgesehen ist, in den ein Spannkeil eingreift.

Durch die mögliche radiale Verlagerung der Schubübertragungskörper in einem der Durchmessertoleranz der Befestigungsflansche der Kranzringe entsprechenden Ausmaß wird in einfacher Weise ein Toleranzausgleich erreicht, weil ja die Schubübertragungskörper lediglich an den Umfangsrand der Kranzringe angestellt werden müssen. Es ist allerdings dafür zu sorgen, dass in jeder Anstelllage die Schubübertragungskörper die auftretenden Schubkräfte sicher auf den Drehschemel bzw. den Fahrzeugrahmen abtragen. Zu diesem Zweck stützen sich die Schubübertragungskörper über Spannkeile an beispielsweise durch ein Schweißen fest mit dem Drehschemel bzw. dem Fahrzeugrahmen verbundenen Anschlägen ab. Die Schubkraftübertragung von den Befestigungsflanschen auf die Anschläge erfolgt somit über die Schubübertragungskörper und die zwischen den Schubübertragungskörpern und den Anschlägen vorgesehenen Spannkeile, die zugleich zum kraftschlüssigen Anstellen der Schubübertragungskörper an den Umfangsrand der Befestigungsflansche dienen.

Mithilfe der erfindungsgemäßen Maßnahmen zum Toleranzausgleich der Durchmesser der Befestigungsflansche der Kranzringe eines Drehkranzes werden insbesondere für eine Serienfertigung vorteilhafte Konstruktionsvoraussetzungen geschaffen, weil die Anschläge auf dem Drehschemel und dem Fahrzeugrahmen ohne Berücksichtigung der Ist-Abmessungen der Befestigungsflansche der Kranzringe und folglich ohne Kranzringe befestigt werden können, was auch einen Toleranzausgleich bei einem Kranzringwechsel erlaubt. Nach dem Anschrauben der Kranzringe am Drehschemel bzw. am Fahrzeugrahmen wird der Toleranzausgleich mithilfe der Schubübertragungskörper vorgenommen, die durch die sich an den Anschlägen abstützenden Spannkeile an den Befestigungsflansch der Kranzringe radial angedrückt werden. Es braucht daher lediglich die Lage der Spannkeile gegenüber dem Anschlag bzw. dem Schubübertragungskörper gesichert werden.

Um einfache Konstruktionsverhältnisse zu schaffen, können die Schubübertragungskörper einen den Keilspalt überbrückenden, auf dem Anschlag aufliegenden Wandsteg mit einem radialen Langloch zur Aufnahme einer im Anschlag gehaltenen Klemmschraube bilden. Der den Keilspalt überbrückende Wandsteg des Schubübertragungskörpers verhindert nicht nur ein seitliches Austreten des Spannkeils aus dem Keilspalt, sondern bildet mit dem radialen Langloch auch eine Schiebeführung des Schubübertragungskörpers gegenüber dem Anschlag, an dem der Schubübertragungskörper nach seiner Anstellung an den Befestigungsflansch des Kranzringes mithilfe einer das Langloch durchsetzenden Klemmschraube festgeklemmt werden kann. Vorteilhaft verläuft dabei die den Keilspalt begrenzende Keilfläche der Schubübertragungskörper senkrecht zum radialen Langloch des Wandstegs.

Weist der Wandsteg der Schubübertragungskörper ein zu deren Keilfläche paralleles Langloch zur Aufnahme einer im Spannkeil gehaltenen Klemmschraube auf, so ergibt sich eine einfache Führung des Spannkeils gegenüber dem Schubübertragungskörper mit dem Vorteil, dass der Spannkeil in der Anschlagstellung des Schubübertragungskörpers am Umfangsrand des Befestigungsflansches des Drehkranzes mit dem Schubübertragungskörper kraftschlüssig durch ein Klemmen verbunden und damit in der jeweiligen Spannstellung gesichert werden kann. Die Keilverbindung wird üblicherweise selbsthemmend ausgeführt.

In der Zeichnung ist der Erfindungsgegenstand beispielsweise dargestellt. Es zeigen
- Fig. 1: ein erfindungsgemäßes Fahrzeug ausschnittsweise in einer Draufsicht auf den Drehschemel und den auf dem Drehschemel festgeschraubten unteren Kranzring eines den Drehschemel mit einem Fahrzeugrahmen verbindenden Drehkranzes,
- Fig. 2: die in radialer Richtung schubfeste Abstützung des Befestigungsflansches eines Kranzringes gegenüber dem Drehschemel bzw. dem Fahrzeugrahmen in einer zum Teil aufgerissenen Draufsicht in einem größeren Maßstab,
- Fig. 3: einen Schnitt nach der Linie III-III der Fig. 2 in einem größeren Maßstab und
- Fig. 4: eine der Fig. 2 entsprechende Darstellung der Abstützung in einer anderen Anstelllage.

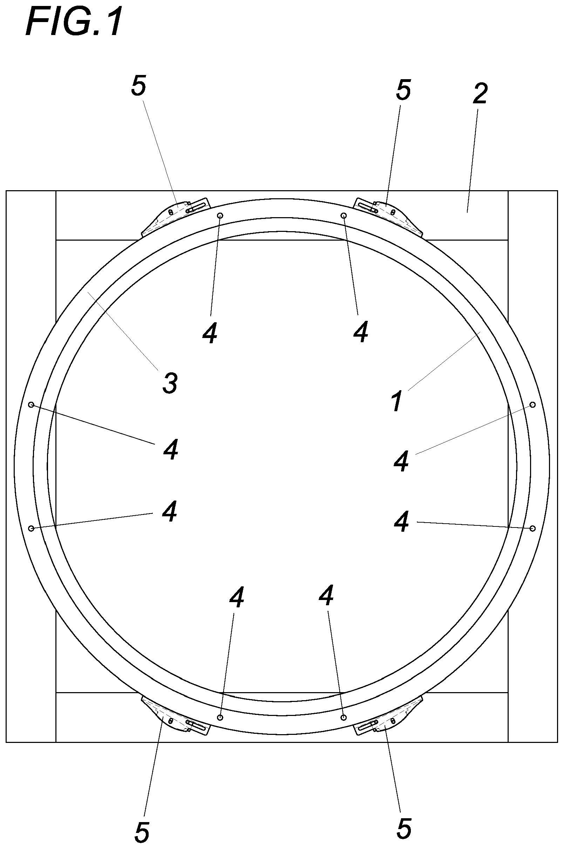

In der Fig. 1 ist einer der Kranzringe 1 eines Drehkranzes dargestellt, der zwischen einem Fahrzeugrahmen und einem Drehschemel 2 vorgesehen ist. Der mit dem Drehschemel 2 verbundene Kranzring 1 weist wie der mit dem Fahrzeugrahmen verschraubte der beiden ineinander drehbar gelagerten Kranzringe 1 einen umlaufenden Befestigungsflansch 3 auf, der mit dem Drehschemel 2 bzw. dem Fahrzeugrahmen durch Befestigungsschrauben 4 befestigt ist. Um die Befestigungsschrauben 4 von auftretenden Querkräften entlasten zu können, werden die Kranzringe 1 zwischen am Umfangsrand der Befestigungsflansche 3 spielfrei anliegenden Schubübertragungskörpern 5 eingefasst, sodass mithilfe der Schubübertragungskörper 5 einerseits die Kranzringe 1 zentriert und anderseits die auftretenden Schubkräfte unter einer Entlastung der Befestigungsschrauben 4 auf den Drehschemel 2 bzw. den Fahrzeugrahmen abgetragen werden können, wodurch auch ein betriebsbedingtes Lösen der Befestigungsschrauben 4 zufolge von Relativbewegungen verhindert wird.

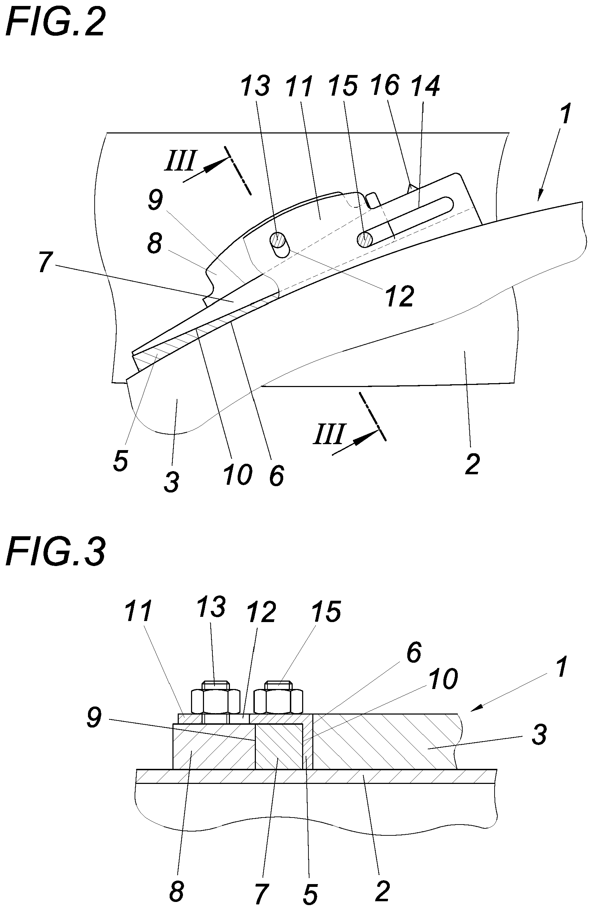

Wie den Fig. 2 und 3 entnommen werden kann, stützen sich die Schubübertragungskörper 5, die eine der Krümmung des Befestigungsflansches 3 folgende, zylindrische Anlagefläche 6 bilden, über einen Spannkeil 7 an einem Anschlag 8 ab, der vorzugsweise durch ein Schweißen fest mit dem Drehschemel 2 bzw. dem Fahrzeugrahmen verbunden ist. Der sich zwischen einer Keilfläche 9 des Anschlags 8 und einer Keilfläche 10 des Schubübertragungskörpers 5 ergebende Keilspalt wird durch einen Wandsteg 11 des Schubübertragungskörpers 5 überbrückt. Der auf dem Anschlag 8 aufliegende Wandsteg 11 weist ein in Bezug auf den Kranzring 1 radiales Langloch 12 auf, das von einer im Anschlag 8 gehaltenen Klemmschraube 13 durchsetzt wird. Die Anordnung ist dabei vorzugsweise so getroffen, dass das radial zum Kranzring 1 ausgerichtete Langloch 12 senkrecht zur Keilfläche 10 des Schubübertragungskörpers 5 verläuft.

Der Wandsteg 11 ist mit einem zweiten Langloch 14 versehen, das parallel zur Keilfläche 10 des Schubübertragungskörpers 5 ausgerichtet ist und eine im Spannkeil 7 gehaltene Klemmschraube 15 aufnimmt. Durch die zueinander senkrecht verlaufenden Langlöcher 12 und 14 wird in Verbindung mit den Klemmschrauben 13 und 15 eine einfache radiale Verschiebeführung des Schubübertragungskörpers 5 mit der Möglichkeit erreicht, die jeweilige durch den Spannkeil 7 bestimmte Lage des Schubübertragungskörpers 5 gegenüber dem Anschlag 8 zu sichern.

Zur spielfreien Einfassung des Befestigungsflansches 3 eines am Drehschemel 2 bzw. am Fahrzeugrahmen festgeschraubten Kranzringes 1 eines Drehkranzes zwischen Schubübertragungskörpern 5 werden die Schubübertragungskörper 5 entlang des Langlochs 14 radial gegenüber dem zugehörigen Anschlag 8 verschoben, indem der Spannkeil 7 in den Keilspalt zwischen den Keilflächen 9 und 10 des Anschlags 8 und des Schubübertragungskörpers 5 eingetrieben wird, bis die Anlagefläche 6 des Schubübertragungskörpers 5 spielfrei am Umfangsrand des Befestigungsflansches 3 des Kranzringes 1 anliegt. Nach dem Festziehen der Klemmschrauben 13 und 15 ist der spielfreie Toleranzausgleich abgeschlossen.

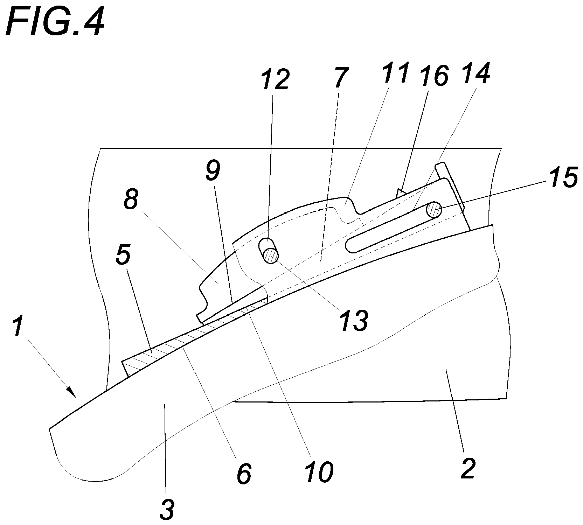

Wie sich aus den Fig. 2 und 4 ergibt, die die beiden radialen Extremstellungen eines Schubübertragungskörpers zeigen, kann im Rahmen des Stellwegs zwischen diesen beiden Extremstellungen ein Toleranzausgleich in Verbindung mit einer Zentrierung sichergestellt werden. Dabei kann davon ausgegangen werden, dass geringfügige Unterschiede in den Krümmungsradien des Umfangsrandes des Befestigungsflansches 3 und der Anlagefläche 6 des Schubübertragungskörpers 5 aufgrund der im Vergleich zum Umfang des Befestigungsflansches 3 kleinen Bogenlänge der Anlagefläche 6 vernachlässigbar sind.

Um die Handhabung zu erleichtern, kann für den Spannkeil 7 eine mittlere Ausgangsstellung zwischen den beiden gezeichneten Extremstellungen durch eine am Wandsteg 11 vorgesehene Markierung 16 vorgegeben werden.

## Patentansprüche

1. Fahrzeug mit einem zwischen einem Drehschemel (2) und einem Fahrzeugrahmen angeordneten Drehkranz aus zwei mithilfe von Wälzkörpern ineinander drehbar gelagerten Kranzringen (1), deren einerseits mit dem Drehschemel (2) und anderseits mit dem Fahrzeugrahmen verschraubte Befestigungsflansche (3) zwischen am Drehschemel (2) und am Fahrzeugrahmen angeordneten, am Umfangsrand der Befestigungsflansche (3) anliegenden Schubübertragungskörpern (5) spielfrei gehalten sind, **dadurch gekennzeichnet, dass** der Drehschemel (2) und der Fahrzeugrahmen Anschläge (8) für die Schubübertragungskörper (5) aufweisen und dass zwischen den Anschlägen (8) und den gegenüber den Anschlägen (8) radial verlagerbaren Schubübertragungskörpern (5) ein in Umfangsrichtung verlaufender Keilspalt vorgesehen ist, in den ein Spannkeil (7) eingreift.

2. Fahrzeug nach Anspruch 1, **dadurch gekennzeichnet, dass** die Schubübertragungskörper (5) einen den Keilspalt überbrückenden, auf dem Anschlag (8) aufliegenden Wandsteg (11) mit einem radialen Langloch (12) zur Aufnahme einer im Anschlag (8) gehaltenen Klemmschraube (13) bilden.

3. Fahrzeug nach Anspruch 2, **dadurch gekennzeichnet, dass** die den Keilspalt begrenzende Keilfläche (10) der Schubübertragungskörper (5) senkrecht zum radialen Langloch (12) des Wandstegs (11) verläuft.

4. Fahrzeug nach Anspruch 2 oder 3, **dadurch gekennzeichnet, dass** der Wandsteg (11) der Schubübertragungskörper (5) ein zu deren Keilfläche (10) paralleles Langloch (14) zur Aufnahme einer im Spannkeil (7) gehaltenen Klemmschraube (15) aufweist.

## Claims

1. Vehicle with a slewing ring arranged between a turntable (2) and a vehicle frame, the slewing ring consisting of two ring assemblies (1) which are rotatably mounted in one another by means of rolling elements and whose fastening flanges (3), which are bolted on the one side to the turntable (2) and on the other side to the vehicle frame, are held without play between thrust transmission elements (5) arranged on the turntable (2) and on the vehicle frame and which thrust transmission elements (5) are in bearing contact with the peripheral edge of the fastening flanges (3), **characterised in that** the turntable (2) and the vehicle frame have stops (8) for the thrust transmission bodies (5) and **in that** a wedge gap extending in the circumferential direction is provided between the stops (8) and the thrust transmission bodies (5) which are radially displaceable relative to the stops (8), in which wedge gap a clamping wedge (7) engages.

2. Vehicle according to claim 1, **characterised in that** the thrust transmission bodies (5) form a wall web (11) bridging the wedge gap and lying on the stop (8), the wall web (11) comprising a radial slotted hole (12) for receiving a clamping screw (13) held in the stop (8).

3. Vehicle according to claim 2, **characterised in that** the wedge surface (10) of the thrust transmission bodies (5) delimiting the wedge gap extends perpendicular to the radial slotted hole (12) of the wall web (11).

4. Vehicle according to claim 2 or 3, **characterised in that** the wall web (11) of the thrust transmission bodies (5) has a slotted hole (14) parallel to the wedge surface (10) of the thrust transmission bodies (5) for receiving a clamping screw (15) held in the clamping wedge (7).

## Revendications

1. Véhicule avec une couronne de rotation disposée entre un tambour de rotation (2) et un châssis de véhicule et composée de deux anneaux de couronne (1) montés de façon à pouvoir pivoter l'un dans l'autre à l'aide d'éléments de roulement, dont les brides de fixation (3) vissées d'un côté avec le tambour de rotation (2) et de l'autre côté avec le châssis de véhicule sont maintenues sans jeu entre des corps de transmission de poussée (5) agencés sur le tambour de rotation (2) et sur le châssis de véhicule et adjacents à la bordure périphérique des brides de fixation (3), **caractérisé en ce que** le tambour de rotation (2) et le châssis de véhicule comportent des butées (8) pour les corps de transmission de poussée (5) et qu'entre les butées (8) et les corps de transmission de poussée (5) pouvant être déplacés radialement par rapport aux butées (8) est prévue une fente cunéiforme courant dans la direction périphérique dans laquelle s'insère une cale de serrage (7).

2. Véhicule selon la revendication 1, **caractérisé en ce que** les corps de transmission de poussée (5) forment une cloison (11) recouvrant la fente cunéiforme, s'appliquant sur la butée (8) et dotée d'un trou longitudinal radial (12) pour recevoir une vis de blocage (13) maintenue dans la butée (8).

3. Véhicule selon la revendication 2, **caractérisé en ce que** la surface inclinée (10) des corps de transmission de poussée (5) délimitant la fente cunéiforme court perpendiculairement au trou longitudinal radial (12) de la cloison (11).

4. Véhicule selon la revendication 2 ou 3, **caractérisé en ce que** la cloison (11) des corps de transmission de poussée (5) présente un trou longitudinal (14) parallèle à sa surface inclinée (10) pour recevoir une vis de blocage (15) maintenue dans la cale de serrage (7).
